# FASCICULE DE BREVET EUROPEEN

(11) **EP 3 376 823 B1**
(45) Date de publication et mention de la délivrance du brevet: **26.02.2020**
(21) Numéro de dépôt: 18161531.1
(22) Date de dépôt: 13.03.2018
(51) Int. Cl.: H04W 88/10, H04W 88/06

(54) **DISPOSITIF DE COMMUNICATION**
KOMMUNIKATIONSVORRICHTUNG
COMMUNICATION DEVICE

(30) Priorité: 14.03.2017 FR 1752086
(43) Date de publication de la demande: 19.09.2018
(73) Titulaire: Ercogener, 49400 Saint-Lambert-des Levées (FR)
(72) Inventeur: FONTES, Eric, 49800 TRELAZE (FR); BRUN, Pascal, 49400 CHACE (FR); DENOEL, Pascal, 31000 TOULOUSE (FR)
(74) Mandataire: Dutreix, Hugues Ours

(56) Documents cités:
- US-A1- 2010 105 376
- US-A1- 2017 006 528
- TANEJA MUKESH: "802.11ah - LPWA interworking", 2016 IEEE NETSOFT CONFERENCE AND WORKSHOPS (NETSOFT), IEEE, 6 juin 2016 (2016-06-06), pages 441-446, XP032917870, DOI: 10.1109/NETSOFT.2016.7502482

## Description

### DOMAINE DE L'INVENTION

La présente invention concerne de manière générale les dispositifs de communication.

### ART ANTERIEUR

On connait de l'état de la technique des dispositifs de communication comprenant plusieurs systèmes de communication sans fil permettant de communiquer avec différents réseaux de communication.

Cependant, les fonctionnalités de communication offertes par ces dispositifs connus sont trop limitées et/ou lesdits dispositifs sont très encombrants.

Le document US 2017/006528 A1 décrit un système de communication utilisant des technologies de réseau Wi-Fi et de réseau cellulaire pour faire fonctionner des dispositifs de l'Internet des Objets.

Le document "802.11ah - LPWA interworking" par Taneja Mukesh décrit des modalités de fonctionnement entre un réseau IEEE 802.11 ah et un réseau LPWA. Ce document décrit aussi un dispositif longue portée sans fil fonctionnant en mode dual.

Le document US 2010/105376 décrit un dispositif de communication mobile qui comprend au moins deux moteurs de communication sans fil longue portée. Chacun des moteurs de communication sans fil longue portée comprend un empilement de protocoles de communication respectivement différents, pour recevoir ou émettre des premiers signaux de communication sans fil longue portée à l'aide d'un premier protocole de communication longue portée simultanément tout en recevant ou en émettant des seconds signaux de communication sans fil longue portée à l'aide d'un second protocole de communication longue portée.

La présente invention a pour but de proposer un nouveau dispositif permettant de palier à tout ou partie des problèmes exposés ci-dessus.

### RESUME DE L'INVENTION

A cet effet, l'invention a pour objet un dispositif de communication conforme à la revendication 1.

Une telle conception du dispositif combinant deux systèmes de communication sans fil destinés à communiquer avec deux réseaux de communication différents, permet notamment de limiter le risque d'échec ou d'incapacité de communication de données.

Le dispositif permet ainsi l'utilisation d'une deuxième communication réseau qui consomme moins d'énergie que la première communication réseau, ce qui, combiné au fait que le dispositif permet d'établir sélectivement ou simultanément deux communications réseau distinctes en termes de protocoles et/ou de fréquences de communication, permet de bénéficier d'un grand nombre de fonctionnalités tout en conservant un encombrement réduit à autonomie équivalente pour le dispositif.

Selon une caractéristique avantageuse de l'invention, le dispositif comprend un boîtier, ou un ensemble de boîtiers, dans lequel sont logés lesdits moyens de stockage, lesdits systèmes et ladite unité de pilotage, ledit boîtier ou ensemble de boîtiers présentant un volume inférieur à 900 cm3.

Selon une caractéristique avantageuse de l'invention, les moyens de stockage d'énergie électrique présentent une capacité inférieure à 35 Ampère-heure.

Selon une caractéristique avantageuse de l'invention, l'unité de pilotage comprend :
- un programme informatique, appelé premier logiciel de pilotage, comprenant des instructions pour piloter au moins la communication de données, et
- des moyens d'exécution dudit logiciel de pilotage,
   et, ledit premier système de communication présentant de préférence un débit en réception supérieur à celui du deuxième système communication, l'unité de pilotage est configurée pour :
- recevoir par le premier système de communication un deuxième logiciel de pilotage,
- remplacer le premier logiciel de pilotage par le deuxième logiciel de pilotage, et
- exécuter ledit deuxième logiciel de pilotage.

Selon une caractéristique avantageuse de l'invention, pour transmettre et/ou recevoir lesdites données, l'unité de pilotage est configurée pour sélectionner le premier système de communication et/ou le deuxième système de communication en fonction de règle(s) prédéfinie(s).

Selon une caractéristique avantageuse de l'invention, l'unité de pilotage est configurée pour :
- détecter une situation anormale telle qu'une utilisation non autorisée ou un dysfonctionnement du dispositif de communication ;
- transmettre une information d'alerte par le premier système de communication et/ou le deuxième système de communication.

Selon une caractéristique avantageuse de l'invention, ledit premier système de communication sans fil comprend au moins l'une des caractéristiques suivantes :
- pour une distancede communication de 1km, une puissance d'émission supérieure à 50mW;
- une puce SIM,
   et ledit deuxième système de communication sans fil présente au moins l'une des caractéristiques suivantes :
- un débit inférieur à 1 Mbits/s;
- pour une distance de communication de 1 km, puissance d'émission inférieure à 50mW.

Selon une caractéristique avantageuse de l'invention, le dispositif de communication comprend aussi au moins un capteur de données, tel qu'un capteur de mouvement ou un capteur de température,
et l'unité de pilotage est configurée pour :
- mémoriser dans une mémoire des données acquises par le ou les capteur(s), et
- transmettre par l'un desdits ou lesdits systèmes de communication un signal relatif aux données acquises.

Selon une caractéristique avantageuse de l'invention, l'unité de pilotage (4) est configurée pour actionner un organe, par exemple une électrovanne, raccordé au dispositif, en fonction d'un signal reçu par l'un et/ou l'autre desdits systèmes de communication et/ou en fonction d'information(s) issue(s) de capteur(s) et/ou en fonction de règle(s) pré-définie(s).

Selon une caractéristique avantageuse de l'invention, le premier système de communication sans fil et le deuxième système de communication sans fil comprennent une antenne logée dans le boîtier ou l'ensemble de boîtiers, et, le dispositif comprenant une carte électronique logée dans le boîtier ou l'ensemble de boîtiers, l'antenne est de préférence imprimée sur la carte électronique. Selon une caractéristique avantageuse de l'invention, le dispositif comprend un système de géolocalisation, par exemple par satellite, configuré pour générer des données de localisation.

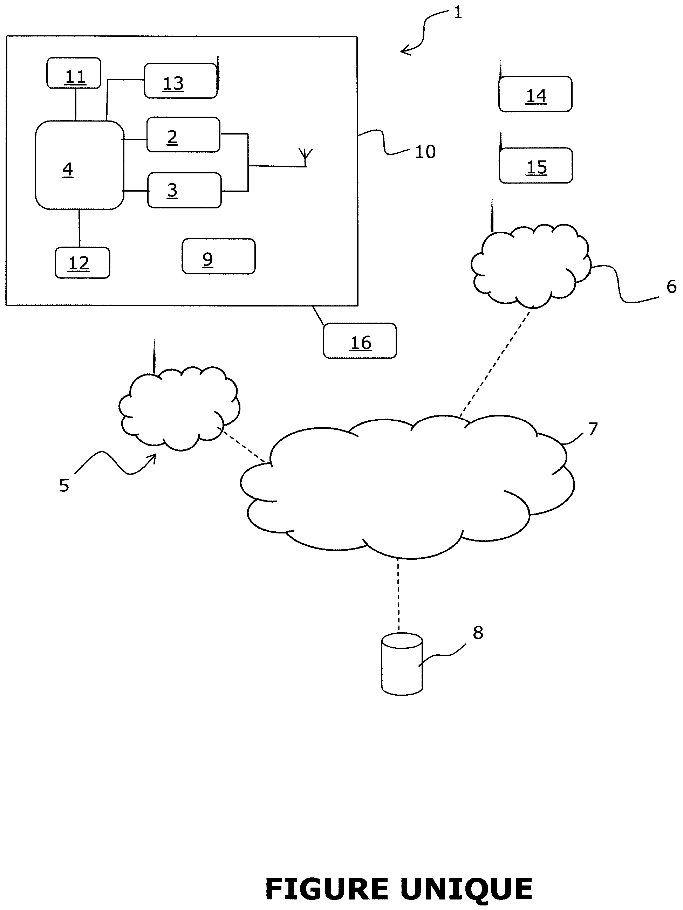

### BREVE DESCRIPTION DU DESSIN

D'autres caractéristiques et avantages de l'invention ressortiront encore de la description qui suit, laquelle est purement illustrative et non limitative et doit être lue en regard de la figure unique qui est une vue schématique, conformément à un mode de réalisation de l'invention, du dispositif de communication et de réseaux de communication avec lesquels le dispositif de communication est apte à communiquer.

### DESCRIPTION DETAILLEE

Le concept de l'invention est décrit plus complètement ci-après avec référence au dessin joint, sur lequel un mode de réalisation du concept de l'invention est montré. Cependant, ce concept de l'invention peut être mis en œuvre sous de nombreuses formes différentes et ne devrait pas être interprété comme étant limité aux modes de réalisation exposés ci-après. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes.

Une référence dans toute la description à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

L'invention concerne un dispositif de communication 1 comprenant un boîtier 10. Le boîtier 10 inclut au moins une partie, de préférence l'ensemble, des composants électriques ou électroniques du dispositif de communication 1. En variante, on peut prévoir que le dispositif comprend un ensemble de boîtiers solidaires dans lesquels sont répartis au moins une partie, de préférence l'ensemble, des différents composants électriques ou électroniques du dispositif. La description est présentée ci-après dans le cas d'un boîtier mais s'applique bien entendu à un ensemble de boîtiers.

On peut prévoir que le dispositif de communication 1 soit couplé à un objet 16, tel qu'un véhicule ou une bobine de câble, ou un contenant tel qu'une palette, bac, container. A titre d'exemple le dispositif de communication 1 peut être couplé à une remorque, un tracteur agricole ou un engin de chantier.

Dans l'exemple illustré à la figure, le boîtier 10 inclut un premier système de communication 2 sans fil configuré pour communiquer avec un premier réseau de communication 5. Avantageusement, le réseau de communication 5 est un réseau à structure cellulaire, tel qu'un réseau de téléphonie mobile ou WIMAX. Le réseau de communication de téléphonie mobile peut être de type terrestre ou satellitaire.

Le premier réseau de communication 5 est apte à communiquer de préférence avec l'un des réseaux suivants : GSM, GPRS, EDGE, UMTS, HSPA, HSPA+, DC-HSPA+, LTE, LTE Advanced, LTEM, satellite tel que IRIDIUM, THURAYA, INMARSAT, GLOBAL STAR, STREAMBOX, VSAT.

Le premier système de communication est formé par exemple par un module électronique commercialisé par U-Blox America Inc. sous la référence SARA U201.

Ledit premier système de communication 2 sans fil comprend au moins l'une des caractéristiques suivantes :
- un débit supérieur à 100 kbits/s ;
- pour une distancede communication de 1km, une puissance d'émission supérieure à 50mW, de préférence supérieure à 100mW;
- une puce SIM (pour Subscriber Identity Module en anglais).

Avantageusement, la puce SIM est au format carte à puce. La puce SIM peut être simplement insérée dans un lecteur de puce monté sur la carte électronique ou soudée sur la carte électronique dans le boîtier. La carte SIM permet d'identifier l'abonné et contient le nom des opérateurs autorisés. La carte SIM peut aussi stocker des informations complémentaires diverses.

Le boîtier inclut aussi un deuxième système de communication 3 sans fil configuré pour communiquer avec un deuxième réseau de communication 6 distinct du premier réseau.

On entend par réseaux de communication distincts le fait que les protocoles de communication utilisés par les deux réseaux pour communiquer respectivement avec les deux systèmes sont différents. Pour autant, lesdits réseaux peuvent comprendre une structure ou architecture physique en tout ou partie commune ou distincte. De préférence, le premier système communique avec le premier réseau selon une gamme de fréquences distincte de la gamme de fréquence de communication entre le deuxième système et le deuxième réseau.

Le deuxième module est de préférence physiquement distinct du premier module. En variante, on peut prévoir que le premier module et le deuxième module comprennent au moins des parties physiques communes.

Le deuxième système de communication est formé par exemple par un module électronique commercialisé par Microchip Technology Inc. sous la référence RN2483.

La portée de communication de chacun des premier et deuxième systèmes de communication est supérieure à 1 km, de préférence au moins 5 km. En particulier, le réseau avec lequel le deuxième système de communication est apte à communiquer, est distinct d'un réseau WIFI (la portée d'un réseau WIFI étant limitée à 1 km en extérieur). Pour une distance de communication donnée entre le système et le réseau correspondant, la puissance d'émission du deuxième système de communication 3 est inférieure à celle du premier système de communication 2 sans fil.

Ledit deuxième système de communication 3 sans fil présente un débit inférieur à 1 Mbits/s, par exemple inférieur à 100 kbits/s. Selon un aspect particulier, pour une distance de communication de 1km, la puissance d'émission du deuxième système de communication 3 est inférieure à 50mW, de préférence inférieure à 25mW, par exemple inférieure à 2 milliwatts.

Le deuxième système de communication 3 sans fil est destiné à communiquer avec un réseau qui est différent d'un réseau de téléphonie mobile ou d'un réseau WIMAX.

Le deuxième système de communication 3 sans fil est apte à communiquer de préférence avec l'un des réseaux suivants : LORA, SIGFOX, INGENU, WEIGHTLESS-N, SENSUS, TELENSA.

Lesdits réseaux avec lequel ledit deuxième système de communication 3 sans fil est apte à communiquer peuvent être du type dénommé LPWAN (pour Low-Power Wide Area Network en anglais), ou encore LTN (pour Low Throughput Networks en anglais) ou LPWN (pour Low Power Wireless Network en anglais) tels que défini notamment par l'ETSI (pour European Télécommunications Standards Institute en anglais).

Avantageusement, le délai de connexion nécessaire au deuxième système de communication 3 pour établir une connexion avec le deuxième réseau de communication 6 est inférieur au délai de connexion nécessaire au premier système de communication 2 pour établir une connexion avec le premier réseau de communication 5.

Selon un mode de réalisation, le premier système de communication 2 est configuré pour communiquer avec le premier réseau de communication 5 sur une bande de fréquences dont la largeur (encore appelée largeur de canal) est supérieure ou égale à 200kHz, de préférence supérieure à 1 MHz.

Selon un mode de réalisation, le deuxième système de communication 3 est configuré pour communiquer avec le deuxième réseau de communication 6 sur une bande de fréquences dont la largeur (encore appelée largeur de canal) est plus étroite que celle associée à la communication entre le premier système et le premier réseau. Selon un aspect particulier, la largeur de la bande de fréquences pour la communication entre le deuxième système et le deuxième réseau est inférieure à 1 MHz, de préférence inférieure à 200kHz.

Le boîtier inclut aussi une unité de pilotage 4 et des moyens de stockage 9 d'énergie autonomes qui permettent d'alimenter les différents composants électriques ou électroniques du dispositif.

Le dispositif peut comprendre aussi un autre ou d'autres système(s) de communication de plus faible portée et configuré(s) pour communiquer avec un ou d'autre(s) réseau(x), ou objets, configurés pour communiquer selon un protocole tel que le protocole Wifi, Bluetooth, Zigbee.

Selon un aspect particulier, les moyens de stockage 9 d'énergie électrique autonomes peuvent comprendre au moins une batterie ou pile, qui permet d'alimenter les composants électriques ou électroniques du dispositif sans être raccordée à une source d'alimentation externe fixe, c'est-à-dire qui ne serait pas mobile avec le dispositif. Autrement dit, lesdits moyens de stockage forment une source d'alimentation interne ou embarquée qui permet un usage autonome du dispositif, au sens où il n'y a pas besoin de le raccorder à une alimentation extérieure fixe par rapport au sol, telle que l'alimentation secteur d'un bâtiment.

Selon un mode de réalisation, le dispositif de communication est déplaçable avec un objet 16 auquel il est couplé et n'a pas besoin d'être raccordé par un câble électrique à une source extérieure fixe pour fonctionner.

Lesdits moyens de stockage d'énergie électrique permettent d'alimenter les composants électriques et/ou électroniques du dispositif. Bien entendu on peut prévoir que lesdits moyens de stockage soient rechargeables ou non (auquel cas un remplacement des moyens de stockage est à prévoir lorsque l'énergie desdits moyens de stockage a été consommée).

On peut prévoir que les moyens de stockage 9 d'énergie électrique soient eux même raccordés à une source d'alimentation externe autonome embarquée sur le dispositif ou sur l'objet auquel est couplé le dispositif, et donc mobile avec le dispositif ou l'objet. Ladite source d'alimentation externe autonome embarquée peut être une cellule ou un panneau photovoltaïque.

A titre d'exemple, le dispositif présente une configuration selon laquelle :
- le premier réseau 2 est un réseau UMTS (3G) avec lequel communique le premier système de communication avec une consommation de 550mA à 3.6V ;
- le deuxième réseau 3 est un réseau SigFox avec lequel communique le deuxième système de communication sur la base d'une durée d'émission de 3 secondes par jour avec une consommation de 50mA à 3.6V ;
- le dispositif consomme en veille 50 µA à 3.6V ;
- les moyens de stockage 9 d'énergie électrique comprennent une pile de 6 A.h ;

Selon une telle configuration, pour envoyer une trame simple de type SMS, le premier système 2 mettra un temps de 30 secondes compte tenu du temps nécessaire de connexion (d'attachement) au réseau, avec une consommation de 550 mA à 3.6V, tandis que le deuxième système 3 mettra un temps inférieur à 3 secondes avec une consommation de 50 mA à 3.6V.

Dans le cas où le dispositif envoie ponctuellement une trame, par exemple une fois par jour, l'utilisation du deuxième système permet de réduire d'un facteur 100 la capacité énergétique dédiée aux transmissions par rapport à une utilisation du premier système. Ainsi, compte tenu du fonctionnement en mode veille du dispositif (50 microampère) et de la capacité de la pile de 6 Ampère-heure, le dispositif permet d'atteindre une autonomie de l'ordre de 13 années, alors que celle-ci serait de 2,8 années en n'utilisant que le premier système.

Ainsi, en sélectionnant l'un et/ou l'autre des systèmes de communication du dispositif, en fonction de règles prédéfinies, dont des exemples sont donnés ci-après, le dispositif bénéficie d'une bien plus grande autonomie.

Le boîtier 10 est un boîtier fermé, de préférence étanche à l'eau et/ou à la poussière. Le boîtier est fermé au sens où les éléments logés dans le boîtier sont inaccessibles depuis l'extérieur en l'absence de démontage ou de destruction du boîtier. Le boîtier 10 présente un volume inférieur à 900 cm3, de préférence inférieur à 250 cm3. Les moyens de stockage 9 d'énergie électrique présentent de préférence une capacité inférieure à 35 Ampère-heure, de préférence inférieure à 10 Ampère-heure, par exemple 6 Ampère-heure.

Selon un mode de réalisation l'unité de pilotage 4 comprend un processeur. De préférence l'unité de pilotage comprend un microcontrôleur qui inclut ledit processeur. L'unité comprend aussi une mémoire qui peut être intégrée ou non au microcontrôleur. Un logiciel de pilotage est installé dans ladite mémoire et permet lorsqu'il est exécuté par le processeur (microcontrôleur) de piloter des éléments connectés au microcontrôleur, tels que les systèmes de communication et différents capteurs comme décrit ci-après. L'unité de pilotage comprend aussi une mémoire, en tout ou partie commune avec la mémoire sur laquelle est installée le logiciel de pilotage, pour le stockage et le traitement de données. Les données peuvent être issues de capteur(s) connecté(s) à l'unité de pilotage et/ou reçues par l'un desdits ou lesdits systèmes de communication en provenance d'un dispositif, tel que capteur, terminal ou serveur.

Le logiciel de pilotage peut être mis à jour en communiquant à l'unité de pilotage la version mise à jour du logiciel par l'intermédiaire du premier et/ou du deuxième système de communication. La mise à jour est de préférence effectuée par le premier système. L'unité de pilotage, en particulier le microcontrôleur peut alors remplacer la version précédente du logiciel par la version mise à jour reçue.

Selon un mode de réalisation, le dispositif utilise principalement le deuxième système de communication dont la consommation est inférieure à celle du premier système de communication. Cependant, dans le cas d'une mise à jour à effectuer pour le logiciel de pilotage, une telle mise à jour du logiciel de pilotage par l'intermédiaire du deuxième système de communication peut poser des problèmes de fiabilité, être longue voire impossible en raison d'une limitation du débit et/ou de la quantité d'octets autorisée au niveau du deuxième système.

La présence dans le dispositif du premier système de communication qui de préférence présente un débit en réception supérieur à celui du deuxième système communication, permet d'effectuer une telle mise à jour à distance de manière plus fiable et sans avoir à utiliser une connexion supplémentaire filaire et/ou de courte portée et sans avoir à changer de boîtier.

Il est important de pouvoir effectuer rapidement et de manière fiable la mise à jour du logiciel de pilotage embarqué dans le dispositif pour palier à d'éventuelles failles de sécurité et/ou pouvoir corriger des erreurs (bugs) de programmation.

Le logiciel de pilotage permet de définir différents modes de fonctionnement correspondant à différentes missions à réaliser par le dispositif. A titre d'exemple, le dispositif peut ainsi relever des informations, agir sur un ou des actionneurs 15, être géolocalisé, analyser des informations qu'il recueille et communiquer selon des règles prédéfinies. La possibilité de mettre à jour le logiciel permet à l'utilisateur de bénéficier ultérieurement de fonctionnalités supplémentaires.

Selon un mode de réalisation, le dispositif peut fonctionner principalement, c'est-à-dire la plus grande partie du temps en communiquant avec le deuxième réseau tout en permettant de procéder à une mise à jour du logiciel de pilotage via le premier réseau de communication. Sous certaines conditions, par exemple lorsque le poids de la mise à jour est inférieur à un nombre de (kilo)octets donné, on peut prévoir que le dispositif autorise la mise à jour par le deuxième réseau.

Selon un mode de réalisation, le dispositif comprend aussi au moins un ou des capteurs 12 de données. Le ou chaque capteur de données peut être choisi parmi la liste non exhaustive suivante : accéléromètre, inclinomètre, et capteurs d'au moins une des grandeurs ou paramètres suivants : mouvement, humidité, lumière, vibration, choc, vitesse, accélération, position, inclinaison, température, pression, humidité, son, luminosité, proximité, champ magnétique, toucher, contact, gravité,...

Le dispositif peut aussi être configuré pour recevoir et, de préférence mémoriser des données issues de capteurs 14 extérieurs qui communiquent avec le dispositif, par liaison filaire ou par le ou les premier et deuxième systèmes de communications sans fil du dispositif, ou encore par un autre systèmes 13 de communications sans fil en particulier par exemple par une communication courte portée de type Bluetooth Low Energy embarquée dans le dispositif. Le dispositif peut être configuré pour réaliser des opérations de traitement sur ces données.

Dans l'exemple illustré à la figure, le dispositif comprend aussi un système 11 de géolocalisation configuré pour générer des données de localisation. On peut prévoir que le dispositif puisse aussi effectuer une géolocalisation par GNSS (pour Global Navigation Satellite System en anglais) ou à l'aide d'un ou desdits systèmes de communication ou encore au moyen de bornes spécifiques. Le système de géolocalisation peut aussi être compris dans l'unité de pilotage.

Selon un mode de réalisation, l'unité de pilotage 4 est configurée pour émettre par l'un desdits ou lesdits systèmes de communication un signal d'information relatif au données acquises ou captées et/ou reçues de l'un ou desdits systèmes de communication, à destination d'un dispositif de réception tel qu'un terminal ou un serveur 8 de données. Le dispositif de réception peut aussi être un organe ou actionneur 15 tel qu'une vanne, moteur, alarme, machine, par exemple pour le commander. Cette opération peut aussi être effectuée à l'aide d'un autre système de communication du dispositif, par exemple un système de plus courte portée ou une liaison filaire.

Comme expliqué ci-après, on peut prévoir que le dispositif, muni ou non de capteur(s), permettent de commander un actionneur par l'intermédiaire d'une information de commande reçue par l'un ou une combinaison des systèmes de communication.

Le dispositif comprend, une carte électronique, appelée PCB, logée dans le boîtier sur laquelle sont montés notamment l'unité de pilotage et les systèmes de communication sans fil. L'unité de pilotage 4 et lesdits systèmes de communication 2, 3 sont montés sur la carte électronique. Avantageusement, le, chacun ou au moins une partie des capteurs est monté(e) sur ladite carte électronique. On peut aussi prévoir comme rappelé ci-dessus que l'unité de pilotage reçoive des données d'au moins un capteur distant 14. En variante, le dispositif peut comprendre plusieurs cartes électroniques.

Le premier système de communication 2 sans fil et le deuxième système de communication 3 sans fil comprennent une antenne commune de préférence logée dans le boîtier. Selon un autre mode de réalisation on peut prévoir que l'antenne soit située sur le boîtier. En variante, on pourrait prévoir que chaque système de communication comprenne sa propre antenne, éventuellement externe au boîtier.

Selon un mode de réalisation, l'antenne est imprimée sur la carte électronique, de préférence des deux côtés de la carte électronique. Une telle conception de l'antenne permet de bénéficier d'un dispositif compact tout en conservant de bonnes performances de communication. En variante, l'antenne peut être une antenne céramique et peut être dissociée de la carte électronique.

L'unité de pilotage 4 est configurée pour, de manière simultanée ou alternativement :
- transmettre des données numériques par le premier système de communication 2 sur le premier réseau de communication 5 ; et de préférence recevoir des données par le premier système de communication 2 ;
- transmettre des données numériques par le deuxième système de communication 3 sur le deuxième réseau de communication 6 ; et de préférence recevoir des données par le deuxième système de communication 3.

Pour transmettre et/ou recevoir lesdites données, l'unité de pilotage 4 est configurée pour sélectionner le premier système de communication 2 et/ou le deuxième système de communication 3 en fonction de règles prédéfinies. En outre, l'unité de pilotage 4 peut faire basculer la transmission de donnée entre le premier système de communication 2 et le deuxième système de communication 3 en fonction de règles prédéfinies. Bien entendu, l'unité de pilotage peut aussi piloter un ou plusieurs autres systèmes de communication du dispositif.

Selon un aspect particulier, les règles prédéfinies incluent des paramètres contextuels. Les paramètres contextuels peuvent comprendre la détection de la présence ou d'absence ou de la perte du premier réseau et/ou deuxième réseau. Le temps de latence pour la transmission de donnée sur le premier ou le deuxième réseau peut être un paramètre pris en compte pour la sélection du premier système de communication et/ou du deuxième système de communication.

On peut prévoir qu'au moins une règle prédéfinie soit liée à une fonction d'économie d'énergie ou à une fonction de sécurité.

On peut prévoir que l'unité de pilotage 4 soit configurée pour émetttre régulièrement par le deuxième système de communication 3 des données à un dispositif de réception, tel qu'un terminal ou serveur 8 pour indiquer l'état ou statut du dispositif (par exemple un état en veille ou en fonctionnement), et pour émettre une donnée d'alerte au moins par le deuxième réseau de communication lorsqu'un état de fonctionnement anormal est détecté.

On peut prévoir aussi que l'unité de pilotage 4 soit configurée pour commander la transmission de données par le deuxième système de communication, par exemple de type LPWAN, lorsque l'énergie restante est inférieure à une valeur seuil pour laquelle le dispositif n'utilise plus ou ne peut plus utiliser le premier système de communication dont la consommation électrique est plus importante que celle du deuxième système de communication.

Avantageusement, l'unité de pilotage 4 peut être configurée pour transmettre des données par le premier système de communication 2, de manière prioritaire par rapport au deuxième système de communication 3 lorsque :
- le dispositif se déplace à une vitesse supérieure à une valeur prédéfinie, et/ou
- le volume d'information à transmettre est supérieur à une valeur seuil donnée et/ou le délai de transmission souhaité est inférieur à une valeur seuil donnée, et/ou
- lorsque le logiciel de pilotage embarqué a besoin d'être mis à jour.

Selon un mode de réalisation, l'unité de pilotage est configurée pour basculer d'un système de communication à un autre pour assurer une fonction d'itinérance, c'est-à-dire lorsqu'un réseau devient non accessible. A titre d'exemple, en fonction de critères contextuels prédéfinis, le basculement peut être réalisé du système 2 vers le système 3, et réciproquement. On peut aussi prévoir que pour un même système 2 ou 3 sélectionné, par exemple le système 2, lorsque la communication entre le système 2 et le réseau 5 est perdue, le système 2 se connecte à un autre réseau avec lequel il est apte à communiquer pour pouvoir continuer à transmettre et/ou recevoir des données.

Selon un mode de réalisation, l'unité de pilotage est configurée pour utiliser simultanément le premier et le deuxième système de communication en cas de situation définie comme importante. Ainsi le premier réseau de communication, tel qu'un réseau de téléphonie mobile, peut être utilisé en complément du deuxième réseau de type LPWAN et réciproquement dans des cas de détection de vol, d'utilisation anormale, de mise en danger de l'opérateur ou d'autrui. L'utilisation des deux systèmes de communication et donc des deux réseaux permet de confirmer une information d'alerte.

Selon un mode de réalisation, les informations transmises et/ou reçues par le dispositif par l'un quelconque des systèmes de communication peuvent être cryptées.

Selon un mode de réalisation particulier, l'unité de pilotage 4 est configurée pour commander un actionneur 15 ou une machine, par exemple une électrovanne, raccordé au dispositif, en fonction d'un signal reçu par l'un et/ou l'autre desdits systèmes de communication ou par des informations issues du ou des capteurs ou par des règles pré-définies (par exemple à heure fixe).

Il est particulièrement avantageux de prévoir de commander un actionneur ou une machine, par l'envoi de consigne à l'unité de pilotage par les deux systèmes de communication et donc par les deux réseaux de communication correspondant pour éviter qu'un problème de communication, par exemple du fait d'une action malveillante ou d'une perturbation accidentelle, au niveau d'un des systèmes entraine une absence de réception de consigne par l'unité de pilotage. L'absence de réception de consigne peut causer des problèmes de sécurité. En particulier, l'utilisation combinée de deux réseaux distincts renforce la sécurité de communication du dispositif et rend plus difficile son piratage. Dans un mode de réalisation, lorsque le dispositif reçoit une consigne via l'un des systèmes 2 ou 3, l'unité de pilotage est configurée pour demander une confirmation de la consigne de commande via l'autre système de communication.

Les réseaux avec lesquels communiquent les systèmes de communication peuvent ou non être reliés au réseau Internet 7.

Les fonctions et étapes décrites ci-dessus peuvent être mise en œuvre sous forme de programme informatique ou via des composants matériels (p. ex. des réseaux de portes programmables) ou des réseaux de neurones ou de l'intelligence artificielle. En particulier, les fonctions et étapes opérées par l'unité de pilotage et les systèmes de communication peuvent être réalisées par des jeux d'instructions ou modules informatiques implémentés dans un processeur ou être réalisées par des composants électroniques dédiés tels que des composants de type FPGA ou ASIC. Il est aussi possible de combiner des parties informatiques et des parties électroniques. Selon un mode de réalisation, lorsqu'il est précisé que des moyens donnés, tels que l'unité de pilotage, sont configurés pour réaliser une opération donnée, on peut prévoir que lesdits moyens comprennent un système électronique et/ou informatique et des instructions informatiques exécutables par ledit système électronique et/ou informatique et permettant de réaliser ladite opération.

Les programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent aussi être exécutés à partir de périphériques de stockage de programme.

L'invention n'est pas limitée aux modes de réalisation illustrés dans le dessin. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Dispositif de communication (1) comprenant des moyens de stockage (9) d'énergie électrique autonomes, **caractérisé en ce que** le dispositif comprend en outre ;
- un premier système de communication (2) sans fil configuré pour communiquer avec un premier réseau de communication (5), de type réseau de téléphonie mobile ou WIMAX;
- un deuxième système de communication (3) sans fil, configuré pour communiquer avec un deuxième réseau de communication (6), différent d'un réseau de type téléphonie mobile ou WIMAX, le deuxième réseau étant de type Low Power Wide Area Network, LPWAN, le réseau avec lequel le deuxième système de communication est configuré à communiquer, étant distinct d'un réseau WIFI,
• la portée de communication de chacun des premier et deuxième systèmes de communication étant supérieure à 1 km,
• et la puissance d'émission du deuxième système de communication étant, pour une distance de communication donnée, inférieure à celle du premier système de communication (2) sans fil ;
- une unité de pilotage (4), telle qu'un microcontrôleur, configurée pour :
- transmettre et/ou recevoir des données numériques par le premier système de communication (2); et
- transmettre et/ou recevoir des données numériques par le deuxième système de communication (3).

2. Dispositif de communication (1) selon la revendication 1, **caractérisé en ce que** le dispositif comprend un boîtier (10), ou un ensemble de boîtiers, dans lequel sont logés lesdits moyens de stockage (9), lesdits systèmes (2, 3) et ladite unité de pilotage (4), ledit boîtier ou ensemble de boîtiers présentant un volume inférieur à 900 cm3.

3. Dispositif de communication (1) selon l'une des revendications précédentes, **caractérisé en ce que** les moyens de stockage (9) d'énergie électrique présentent une capacité inférieure à 35 Ampère-heure.

4. Dispositif de communication (1) selon l'une des revendications précédentes, **caractérisé en ce que** l'unité de pilotage (4) comprend :
- un programme informatique, appelé premier logiciel de pilotage, comprenant des instructions pour piloter au moins la communication de données, et
- des moyens d'exécution dudit logiciel de pilotage,
et **en ce que**, ledit premier système de communication (2) présentant de préférence un débit en réception supérieur à celui du deuxième système communication (3), l'unité de pilotage (4) est configurée pour :
- recevoir par le premier système de communication (2) un deuxième logiciel de pilotage,
- remplacer le premier logiciel de pilotage par le deuxième logiciel de pilotage, et
- exécuter ledit deuxième logiciel de pilotage.

5. Dispositif de communication (1) selon l'une des revendications précédentes, **caractérisé en ce que**, pour transmettre et/ou recevoir lesdites données, l'unité de pilotage (4) est configurée pour sélectionner le premier système de communication (2) et/ou le deuxième système de communication (3) en fonction de règle(s) prédéfinie(s).

6. Dispositif de communication (1) selon l'une des revendications précédentes, **caractérisé en ce que** l'unité de pilotage (4) est configurée pour :
- détecter une situation anormale telle qu'une utilisation non autorisée ou un dysfonctionnement du dispositif de communication (1) ;
- transmettre une information d'alerte par le premier système de communication (2) et/ou le deuxième système de communication (3).

7. Dispositif de communication (1) selon l'une des revendications précédentes, **caractérisé en ce que** ledit premier système de communication (2) sans fil comprend au moins l'une des caractéristiques suivantes :
- pour une distancede communication de 1km, une puissance d'émission supérieure à 50mW;
- une puce SIM,
et **en ce que** ledit deuxième système de communication (3) sans fil présente au moins l'une des caractéristiques suivantes :
- un débit inférieur à 1 Mbits/s;
- pour une distance de communication de 1 km, puissance d'émission inférieure à 50mW.

8. Dispositif de communication (1) selon l'une des revendications précédentes, **caractérisé en ce que** le dispositif de communication (1) comprend aussi au moins un capteur (12) de données, tel qu'un capteur de mouvement ou un capteur de température,
et **en ce que** l'unité de pilotage (4) est configurée pour :
- mémoriser dans une mémoire des données acquises par le ou les capteur(s) (12), et
- transmettre par l'un desdits ou lesdits systèmes de communication (2, 3) un signal relatif aux données acquises.

9. Dispositif de communication (1) selon l'une des revendications précédentes, **caractérisé en ce que** l'unité de pilotage (4) est configurée pour actionner un organe (15), par exemple une électrovanne, raccordé au dispositif, en fonction d'un signal reçu par l'un et/ou l'autre desdits systèmes de communication et/ou en fonction d'information(s) issue(s) de capteur(s) et/ou en fonction de règle(s) pré-définie(s).

10. Dispositif de communication (1) selon l'une des revendications 2 à 9, **caractérisé en ce que** le premier système de communication (2) sans fil et le deuxième système de communication (3) sans fil comprennent une antenne logée dans le boîtier (10) ou l'ensemble de boîtiers,
et **en ce que**, le dispositif comprenant une carte électronique logée dans le boîtier (10) ou l'ensemble de boîtiers, l'antenne est de préférence imprimée sur la carte électronique.

11. Dispositif de communication (1) selon l'une des revendications précédentes, **caractérisé en ce que** le dispositif comprend un système (11) de géolocalisation, par exemple par satellite, configuré pour générer des données de localisation.

## Patentansprüche

1. Kommunikationsvorrichtung (1), die autonome Speichereinrichtungen (9) zur Speicherung von elektrischer Energie umfasst, **dadurch gekennzeichnet, dass** die Vorrichtung ferner umfasst:
- ein erstes drahtloses Kommunikationssystem (2), das dazu ausgestaltet ist, mit einem ersten Kommunikationsnetz (5) vom Typ Mobiltelefonnetz oder WIMAX-Netz zu kommunizieren;
- ein zweites drahtloses Kommunikationssystem (3), das dazu ausgestaltet ist, mit einem zweiten Kommunikationsnetz (6), das verschieden von einem Netz vom Mobiltelefon- oder WIMAX-Typ ist, zu kommunizieren, wobei das zweite Netz vom Typ Low Power Wide Area Network LPWAN ist, wobei das Netz, zur Kommunikation mit welchem das zweite Kommunikationssystem ausgestaltet ist, verschieden von einem WLAN-Netz ist,
• wobei die Kommunikationsreichweite jedes der ersten und zweiten Kommunikationssysteme mehr als 1 km beträgt,
• und wobei die Sendeleistung des zweiten Kommunikationssystems bei einer gegebenen Kommunikationsentfernung geringer als die des ersten drahtlosen Kommunikationssystems (2) ist;
- eine Steuerungseinheit (4) wie einen Mikrocontroller, die dazu ausgestaltet ist:
- digitale Daten zu übertragen und/oder vom ersten Kommunikationssystem (2) zu empfangen; und
- digitale Daten zu übertragen und/oder vom zweiten Kommunikationssystem (3) zu empfangen.

2. Kommunikationsvorrichtung (1) nach Anspruch 1, **dadurch gekennzeichnet, dass** die Vorrichtung ein Gehäuse (10) oder eine Gehäuseanordnung umfasst, in dem bzw. in der die Speichereinrichtungen (9), die Systeme (2, 3) und die Steuerungseinheit (4) untergebracht sind, wobei das Gehäuse oder die Gehäuseanordnung ein Volumen von weniger als 900 cm³ aufweist.

3. Kommunikationsvorrichtung (1) nach einem der vorhergehenden Ansprüche, **dadurch gekennzeichnet, dass** die Speichereinrichtungen (9) zur Speicherung von elektrischer Energie eine Kapazität von weniger als 35 Amperestunden aufweisen.

4. Kommunikationsvorrichtung (1) nach einem der vorhergehenden Ansprüche, **dadurch gekennzeichnet, dass** die Steuerungseinheit (4) umfasst:
- ein Computerprogramm, erste Steuerungssoftware genannt, das Befehle umfasst, um zumindest die Datenkommunikation zu steuern, und
- Einrichtungen zur Ausführung der Steuerungssoftware, und dass, wobei das erste Kommunikationssystem (2) bevorzugt eine höhere Empfangsgeschwindigkeit als das zweite Kommunikationssystem (3) aufweist, die Steuerungseinheit (4) dazu ausgestaltet ist:
- vom ersten Kommunikationssystem (2) eine zweite Steuerungssoftware zu empfangen,
- die erste Steuerungssoftware durch die zweite Steuerungssoftware zu ersetzen und
- die zweite Steuerungssoftware auszuführen.

5. Kommunikationsvorrichtung (1) nach einem der vorhergehenden Ansprüche, **dadurch gekennzeichnet, dass** die Steuerungseinheit (4), um Daten zu übertragen und/oder zu empfangen, dazu ausgestaltet ist, das erste Kommunikationssystem (2) und/oder das zweite Kommunikationssystem (3) in Abhängigkeit von einer oder mehreren vorgegebenen Regel(n) zu wählen.

6. Kommunikationsvorrichtung (1) nach einem der vorhergehenden Ansprüche, **dadurch gekennzeichnet, dass** die Steuerungseinheit (4) dazu ausgestaltet ist:
- eine anomale Situation wie eine unbefugte Verwendung oder eine Funktionsstörung der Kommunikationsvorrichtung (1) zu erkennen;
- eine Warninformation durch das erste Kommunikationssystem (2) und/oder das zweite Kommunikationssystem (3) zu übertragen.

7. Kommunikationsvorrichtung (1) nach einem der vorhergehenden Ansprüche, **dadurch gekennzeichnet, dass** das erste drahtlose Kommunikationssystem (2) mindestens eines der folgenden Merkmale umfasst:
- bei einer Kommunikationsentfernung von 1 km eine Sendeleistung von mehr als 50 mW;
- einen SIM-Chip,
und dass das zweite drahtlose Kommunikationssystem (3) mindestens eines der folgenden Merkmale umfasst:
- eine Geschwindigkeit von weniger als 1 MBit/s;
- bei einer Kommunikationsentfernung von 1 km eine Sendeleistung von weniger als 50 mW.

8. Kommunikationsvorrichtung (1) nach einem der vorhergehenden Ansprüche, **dadurch gekennzeichnet, dass** die Kommunikationsvorrichtung (1) zudem mindestens einen Datensensor (12) wie einen Bewegungssensor oder einen Temperatursensor umfasst und dass die Steuerungseinheit (4) dazu ausgestaltet ist:
- in einem Speicher Daten, die von dem oder den Sensor(en) (12) erfasst wurden, zu speichern und
- ein die erfassten Daten betreffendes Signal durch eines der Kommunikationssysteme oder die Kommunikationssysteme (2, 3) zu übertragen.

9. Kommunikationsvorrichtung (1) nach einem der vorhergehenden Ansprüche, **dadurch gekennzeichnet, dass** die Steuerungseinheit (4) dazu ausgestaltet ist, ein Organ (15), beispielsweise ein Magnetventil, das an die Vorrichtung angeschlossen ist, in Abhängigkeit von einem Signal, das über das eine und/oder das andere der Kommunikationssysteme empfangen wird, und/oder in Abhängigkeit von einer oder mehreren Information(en), die von einem oder mehreren Sensor (en) stammen, und/oder in Abhängigkeit von einer oder mehreren vorgegebenen Regel(n) zu betätigen.

10. Kommunikationsvorrichtung (1) nach einem der Ansprüche 2 bis 9, **dadurch gekennzeichnet, dass** das erste drahtlose Kommunikationssystem (2) und das zweite drahtlose Kommunikationssystem (3) eine Antenne umfassen, die in dem Gehäuse (10) oder der Gehäuseanordnung untergebracht ist,
und dass, wenn die Vorrichtung eine Platine umfasst, die im Gehäuse (10) oder in der Gehäuseanordnung untergebracht ist, die Antenne bevorzugt auf die Platine gedruckt ist.

11. Kommunikationsvorrichtung (1) nach einem der vorhergehenden Ansprüche, **dadurch gekennzeichnet, dass** die Vorrichtung ein Geolokalisierungssystem (11), beispielsweise über Satellit, umfasst, das dazu ausgestaltet ist, Lokalisierungsdaten zu erzeugen.

## Claims

1. Communication device (1) comprising autonomous means of electrical energy storage (9), **characterized in that** the device furthermore comprises;
- a first wireless communication system (2) configured to communicate with a first communication network (5), of mobile telephone network or WIMAX type;
- a second wireless communication system (3), configured to communicate with a second communication network (6), different from a network of mobile telephone or WIMAX type, the second network being of Low Power Wide Area Network, LPWAN, type, the network with which the second communication system is configured to communicate, being distinct from a WIFI network,
• the communication range of each of the first and second communication systems being greater than 1 km,
• and the transmission power of the second communication system being, for a given communication distance, less than that of the first wireless communication system (2);
- a drive unit (4), such as a microcontroller, configured to:
- transmit and/or receive digital data by the first communication system (2); and
- transmit and/or receive digital data by the second communication system (3).

2. Communication device (1) according to Claim 1, **characterized in that** the device comprises a housing (10), or a set of housings, in which are accommodated the said storage means (9), the said systems (2, 3) and the said drive unit (4), the said housing or set of housings exhibiting a volume of less than 900 cm3.

3. Communication device (1) according to one of the preceding claims, **characterized in that** the means of electrical energy storage (9) exhibit a capacity of less than 35 Ampere-hours.

4. Communication device (1) according to one of the preceding claims, **characterized in that** the drive unit (4) comprises:
- a computer program, called first drive software, comprising instructions for driving at least the communication of data, and
- means for executing the said drive software,
and **in that**, the said first communication system (2) preferably exhibiting a greater bitrate in reception than that of the second communication system (3), the drive unit (4) is configured to:
- receive by the first communication system (2) a second drive software,
- replace the first drive software by the second drive software, and
- execute the said second drive software.

5. Communication device (1) according to one of the preceding claims, **characterized in that**, to transmit and/or receive the said data, the drive unit (4) is configured to select the first communication system (2) and/or the second communication system (3) as a function of predefined rule(s).

6. Communication device (1) according to one of the preceding claims, **characterized in that** the drive unit (4) is configured to:
- detect an abnormal situation such as an unauthorized use or a malfunction of the communication device (1);
- transmit an item of alert information by the first communication system (2) and/or the second communication system (3).

7. Communication device (1) according to one of the preceding claims, **characterized in that** the said first wireless communication system (2) comprises at least one of the following characteristics:
- for a communication distance of 1km, a transmission power of greater than 50mW;
- a SIM chip,
and **in that** the said second wireless communication system (3) exhibits at least one of the following characteristics:
- a bitrate of less than 1 Mbits/s;
- for a communication distance of 1 km, transmission power of less than 50mW.

8. Communication device (1) according to one of the preceding claims, **characterized in that** the communication device (1) also comprises at least one data sensor (12), such as a motion sensor or a temperature sensor,
and **in that** the drive unit (4) is configured to:
- store in a memory data acquired by the sensor or sensors (12), and
- transmit by one of the said or the said communication systems (2, 3) a signal relating to the acquired data.

9. Communication device (1) according to one of the preceding claims, **characterized in that** the drive unit (4) is configured to actuate a member (15), for example an electrovalve, hooked up to the device, as a function of a signal received by one and/or the other of the said communication systems and/or as a function of information arising from sensor(s) and/or as a function of predefined rule(s).

10. Communication device (1) according to one of Claims 2 to 9, **characterized in that** the first wireless communication system (2) and the second wireless communication system (3) comprise an antenna accommodated in the housing (10) or the set of housings,
and **in that**, the device comprising an electronic card accommodated in the housing (10) or the set of housings, the antenna is preferably printed on the electronic card.

11. Communication device (1) according to one of the preceding claims, **characterized in that** the device comprises a geolocation system (11), for example satellite based, configured to generate location data.
